# DEMANDE DE BREVET EUROPEEN

(11) **EP 3 242 076 A1**
(43) Date de publication de la demande: **08.11.2017**
(21) Numéro de dépôt: 17168852.6
(22) Date de dépôt: 28.04.2017
(51) Int. Cl.: F21S 8/10, G02B 6/00

(54) **MODULE LUMINEUX COMPRENANT DES MIROIRS MOBILES**

(30) Priorité: 04.05.2016 FR 1654045
(71) Demandeur: Valeo Vision, 93012 Bobigny Cedex (FR)
(72) Inventeur: MEYRENAUD, Jean-Luc, 93012 Bobigny Cedex (FR)
(74) Mandataire: Oggioni, Baptiste

(57) **Abrégé**

Module lumineux pour véhicule automobile, comportant un réflecteur présentant au moins deux portions de surfaces, au moins l'une des portion de surfaces étant mobile, et au moins deux source lumineuses, chaque source lumineuse étant associée à l'une des portions de surfaces pour générer un faisceau lumineux primaire par réflexion de la lumière issue de ladite source. Le module lumineux est configuré pour une portion de surface soit mobile et présente un mouvement qui fasse varier le recouvrement entre les faisceaux lumineux générés par le module lumineux.

## Description

La présente invention appartient au domaine des dispositifs d'émission lumineuse, et en particulier au domaine des modules d'émission lumineuse compris dans de tels dispositifs.

On entend par dispositif d'émission lumineuse tout dispositif apte à émettre de la lumière. Par exemple, un projecteur ou un feu d'un véhicule, une lampe de poche, une lumière intégrée à l'intérieur d'un véhicule, une veilleuse intégrée à un siège d'un wagon de train, un composant d'un écran de télévision ou encore un projecteur de forte intensité compris sur un navire garde côte sont des exemples de dispositifs d'émission lumineuse. On entend par véhicule tout type de dispositif apte à se déplacer, tel qu'une voiture, un camion, un scooter, un avion, un train ou encore un traineau.

On entend par module d'émission lumineuse tout sous-dispositif du dispositif d'émission lumineuse à partir duquel la lumière est émise. Ainsi, le module d'émission lumineuse peut comprendre une source lumineuse.

La diversité des formes et des effets est particulièrement recherchée lors de la conception de dispositifs d'émission lumineuse, pour des raisons esthétiques d'abord, mais également pour des raisons d'encombrement. En particulier, les modules d'émission lumineuse aptes à combiner des fonctions d'éclairage et de signalisation différentes sont particulièrement recherchés.

L'utilisation d'un seul module d'émission lumineuse comme feu de route, High Beam en anglais, et comme feu de croisement, Low Beam en anglais, est connue. Cependant, différentes contraintes technologiques ont jusqu'à lors restreint la conception de modules combinant des fonctions plus disparates. Par exemple, la combinaison d'un feu de circulation diurne, « DRL » pour Daytime Running Lamp en anglais, avec un feu de croisement ou un feu de route est particulièrement difficile à mettre en oeuvre.

En effet, les contraintes d'éclairement imposées aux feux de croisement/route et aux feux de circulation diurne sont très différentes. En particulier, les feux de croisement/route doivent pouvoir générer un faisceau lumineux directif et présentant une forte intensité dans une direction donnée. Au contraire, les feux de circulation diurne doivent présenter une faible directivité (éclairage isotrope) et une intensité moyenne.

Ainsi, il existe un besoin de module d'émission lumineuse qui puisse combiner diverses fonctions, dont certaines présentent des contraintes très différentes.

La présente invention vient améliorer la situation.

A cet effet, un premier aspect de l'invention vise un module lumineux pour véhicule automobile, comportant un réflecteur présentant au moins deux portions de surfaces, au moins l'une des portion de surfaces étant mobile, et au moins deux source lumineuses, chaque source lumineuse étant associée à l'une des portions de surfaces pour générer un faisceau lumineux primaire par réflexion de la lumière issue de ladite source ;
caractérisé en ce que ladite au moins une portion de surface mobile est apte être déplacée :
- selon une première position de sorte à ce que les portions de surfaces prennent une première configuration dans laquelle les faisceaux lumineux primaires sont réfléchis pour se superposer en un premier faisceau global présentant une intensité maximale supérieure à une première valeur seuil donnée ;
- selon une deuxième position de sorte à ce que les portions de surfaces prennent une deuxième configuration dans laquelle les faisceaux lumineux primaires sont réfléchis pour se superposer en un deuxième faisceau global présentant une intensité maximale inférieure à une deuxième valeur seuil donnée ;
la première valeur seuil donnée étant 10 fois supérieure à la deuxième valeur seuil donnée.

On entend par « portion de surface » tout type de portion de tout type de surface. Une portion circulaire d'une surface plane, un point d'une surface parabolique, la totalité d'une surface hyperboloïdale ou encore une première sous-portion d'une surface conique combinée avec une deuxième sous-portion de la surface conique sont des exemples de portions de surfaces.

La mobilité de la portion de surface associée à une source lumineuse rend notamment possible la modification de la focalisation de la source par rapport à la surface. Les rayons émis par la source ne sont donc plus réfléchis selon un faisceau concentré et intense mais selon un faisceau peu directif et dont l'intensité est réduite.

En outre, la prise en compte de l'intensité maximale a pour effet de garantir que, selon la position de la portion de surface mobile, les faisceaux ne dépassent pas les exigences légales. De plus, un effet spécifique au choix de cette valeur est obtenu dans la mesure où cette valeur est le meilleur compromis entre la complexité du mouvement imposé à la portion de surface, la qualité requise des matériaux, notamment pour la réflexion et les sources, et les exigences légales.

En plus de pouvoir réduire l'encombrement du dispositif d'émission lumineuse en combinant dans un seul module d'émission lumineuse des fonctions telles que feu de croisement/route et feu de circulation diurne, le module selon l'invention comporte au moins une portion de surface dont le mouvement présente une esthétique très recherchée.

Dans un mode de réalisation, le mouvement de la portion mobile de la première position vers la deuxième position est agencé pour décaler le faisceau primaire réalisé par la portion mobile par rapport au faisceau primaire réalisé par une autre portion du réflecteur, de sorte à diminuer le recouvrement des faisceaux primaires et l'intensité maximale du faisceau global réalisé par la superposition des faisceaux primaires. La diminution du recouvrement par un simple mouvement de la portion mobile rend possible la double fonction du module lumineux selon l'invention, par exemple feu de croisement/route et circulation diurne.

Dans un autre mode de réalisation, le mouvement de la portion mobile de la première position vers la deuxième position est agencé pour écarter un foyer de ladite portion mobile de la position de la source lumineuse associée à la portion mobile.

Dans un mode de réalisation, la première position de la portion mobile est une position dans laquelle la source lumineuse associée à la portion mobile est disposée sensiblement au foyer de la portion mobile.

Dans un autre mode de réalisation, la deuxième position de la portion mobile est une position dans laquelle la source lumineuse associée à la portion mobile est disposée sensiblement en dehors du foyer de la portion mobile.

La défocalisation de la source par rapport à la portion de surface mobile a notamment pour effet d'éparpiller les rayons réfléchis dans plusieurs directions. Ainsi, le recouvrement des faisceaux primaires est diminué ce qui réduit l'intensité maximale du faisceau global.

Dans un mode de réalisation, le réflecteur comporte au moins trois portions de surfaces mobiles, notamment quatre. Dans ce mode de réalisation, chaque portion est mobile par rapport à la source lumineuse qui lui est associée. Ainsi, chaque source lumineuse est utilisée de manière à ce que le faisceau global résultant corresponde à la fonction souhaitée.

Dans un autre mode de réalisation, les sources lumineuses sont des puces émettrices de lumière à semi-conducteur. Dans un mode de réalisation particulier, les puces émettrices sont des diodes électroluminescentes. De telles puces présentent des caractéristiques d'émission et d'encombrement particulièrement bien adaptées aux portions de surface mobiles. En effet, pour utiliser de telles surfaces mobiles, les sources doivent être compactes et être aptes à émettre un rayonnement de forte intensité.

Dans un mode de réalisation, les sources lumineuses sont formées par des extrémités de guides de lumière, d'autres extrémités respectives des guides étant reliées aux puces émettrices. L'utilisation de guides simplifie la conception des modules dans la mesure où il est plus facile de positionner les extrémités des guides à des endroits peu accessibles tels que les foyers des portions de surface.

Dans un mode de réalisation, le module comporte au moins trois portions de surface, dans lequel :
au moins une première portion, notamment deux, est configurée pour générer un faisceau primaire plat par réflexion ;
au moins une deuxième portion est configurée pour générer un faisceau primaire de portée par réflexion ;
au moins une troisième portion est configurée pour générer un faisceau primaire à coupure oblique par réflexion.

On entend par « faisceau primaire plat » tout type de faisceau large comprenant une coupure horizontale. On entend par « faisceau primaire de portée » tout type de faisceau concentré comprenant une coupure horizontale. On entend par « faisceau primaire à coupure oblique » tout type de faisceau comprenant une coupure oblique. Lorsqu'un faisceau est projeté contre un écran, la zone comprise dans la coupure n'est pas éclairée sur l'écran par le faisceau.

Le faisceau global issu de la superposition des faisceaux susmentionnés présente les caractéristiques requises pour fonctionner comme un feu de croisement/route.

En particulier, dans un mode de réalisation, les première, deuxième et troisième portions sont mobiles de sorte à être aptes à être déplacées de la première à la deuxième position. Dans ce mode de réalisation, un premier faisceau global réalisé par la superposition, lorsque les première, deuxième et troisième portions sont dans la première position, des faisceaux primaires plat, de portée et oblique est un faisceau de type croisement réglementaire.

De même, dans un mode de réalisation, les première, deuxième et troisième portions sont mobiles de sorte à être aptes à être déplacées de la première à la deuxième position. Dans ce mode de réalisation, un deuxième faisceau global réalisé par la superposition, lorsque les première, deuxième et troisième portions sont dans la deuxième position, des faisceaux primaires plat, de portée et oblique est un faisceau de type feu diurne réglementaire.

Ainsi, selon la position des portions mobiles, les faisceaux globaux sont des feux réglementaires et peuvent donc être installés sur des véhicules automobiles.

Dans un autre mode de réalisation, au moins une portion de surface est une surface de type complexe. Dans ce mode de réalisation, la surface de type complexe comporte une section présentant une première partie inférieure présentant un premier foyer agencé de sorte à ce que des rayons lumineux émis à partir de ce premier foyer soient renvoyés au-dessous d'une ligne prédéterminée. La surface comporte en outre une deuxième partie supérieure présentant un deuxième foyer, distinct du premier foyer, agencé de sorte à ce que des rayons lumineux émis à partir de ce deuxième foyer soient renvoyés au-dessous de ladite ligne prédéterminée.

On entend par « ligne prédéterminée » tout type de ligne, par exemple sensiblement horizontale, visible lorsque le faisceau généré par le module est projeté sur un écran. Par exemple, la ligne prédéterminée peut correspondre à une exigence réglementaire de séparation entre une partie supérieure et une partie inférieure du faisceau émis par un feu de route/croisement ou diurne.

Dans un mode de réalisation, la source lumineuse associée à la portion de surface de type complexe est disposée au barycentre desdits premier et deuxième foyers, le barycentre constituant le foyer de la portion de surface. Les faisceaux primaires plat, de portée et/ou oblique peuvent aisément être réfléchis sur une telle surface de type complexe.

Dans un autre mode de réalisation, au moins une portion de surface présente une section de profil parabolique. L'utilisation de telles surfaces paraboliques simplifie la conception et la fabrication des modules lumineux.

L'invention couvre tout type de combinaison d'une ou plusieurs surfaces de type complexe avec une ou plusieurs surfaces paraboliques.

Dans un mode de réalisation, le module lumineux comporte un dispositif de contrôle de l'alimentation électrique des sources lumineuses agencé pour diminuer la puissance électrique fournies à au moins une source lumineuse lorsque la portion mobile est déplacée de la première position vers la deuxième position. Le mouvement de la portion de surface mobile est ainsi combiné avec une variation de l'intensité de sorte que le faisceau global émis réponde parfaitement aux exigences réglementaires.

D'autres caractéristiques et avantages de l'invention apparaîtront à l'examen de la description détaillée ci-après, et des dessins annexés sur lesquels:
- la figure 1A illustre le module lumineux selon un mode de réalisation de l'invention, dans la première position ;
- la figure 1B illustre le mouvement du module lumineux selon un mode de réalisation de l'invention de la première position à la deuxième position ;
- la figure 1C illustre le module lumineux selon un mode de réalisation de l'invention, dans la deuxième position ;
- la figure 2 est un diagramme d'éclairement du module lumineux selon un mode de réalisation de l'invention, dans la première position ;
- la figure 3 est un diagramme d'éclairement du module lumineux selon un mode de réalisation de l'invention, dans la deuxième position ;
- la figure 4A illustre le module lumineux selon un autre mode de réalisation de l'invention ;
- la figure 4B illustre le détail des guides du module lumineux selon l'autre mode de réalisation de l'invention.

Le module d'émission lumineuse selon l'invention est décrit ci-après dans son application, non limitative, à un dispositif d'émission lumineuse d'un véhicule automobile. D'autres applications telles qu'un dispositif selon l'invention utilisé comme projecteur ou décoration intérieure d'un véhicule automobile, comme guirlande de noël ou encore comme panneau de signalisation sont également envisageables.

Le module est par exemple configuré pour mettre en oeuvre une ou plusieurs fonctions photométriques.

Une fonction photométrique est par exemple une fonction d'éclairage et/ou signalisation visible pour un oeil humain. On remarque que ces fonctions photométriques peuvent faire l'objet d'une ou plusieurs réglementations établissant des exigences de colorimétrie, d'intensité, de répartition spatiale selon une grille dite photométrique, ou encore de plages de visibilité de la lumière émise.

Un dispositif d'émission lumineuse comprenant le module selon l'invention est par exemple un dispositif d'éclairage et constitue alors un projecteur - ou phare avant - de véhicule. Il est alors configuré pour mettre en oeuvre une ou plusieurs fonctions photométriques par exemple choisie(s) parmi une fonction de feux de croisement dite « fonction code » (réglementations 87 et 123 UNECE), une fonction feu de position (réglementation 007 UNECE), une fonction de feux de route dite « fonction route » (réglementation 123 UNECE), une fonction antibrouillard (réglementations 019 et 038 UNECE).

Alternativement, le dispositif est un dispositif de signalisation destiné à être agencé à l'avant ou à l'arrière du véhicule.

Lorsqu'il est destiné à être agencé à l'avant, ces fonctions photométriques incluent une fonction d'indication de changement de direction (réglementation 006 UNECE), une fonction d'éclairage diurne connue sous l'acronyme anglophone DRL (réglementation 087 UNECE), pour « Daytime Running Light », une fonction de signature lumineuse avant.

Lorsqu'il est destiné à être agencé à l'arrière, ces fonctions photométriques incluent une fonction d'indication de recul (réglementation 023 UNECE), une fonction stop (réglementation 007 UNECE), une fonction antibrouillard (réglementations 019 et 038 UNECE), une fonction d'indication de changement de direction (réglementation 006 UNECE), une fonction de signature lumineuse arrière.

Alternativement, le dispositif est prévu pour l'éclairage de l'habitacle d'un véhicule et est alors destiné à émettre de la lumière principalement dans l'habitacle du véhicule.

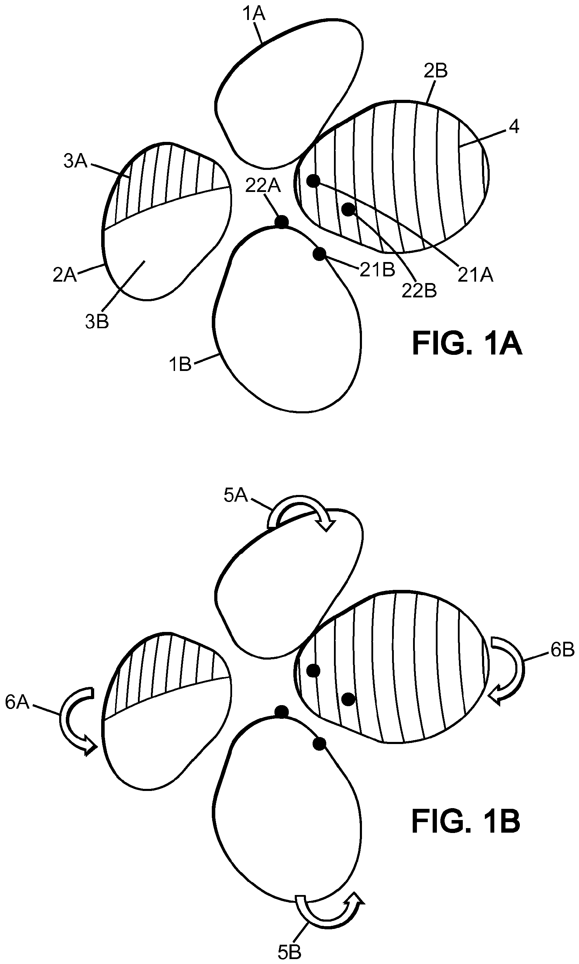

La **figure 1A** représente un module d'émission lumineuse, selon un mode de réalisation de l'invention, dans une première position.

Le module comprend quatre portions de surface 1A, 1B, 2A et 2B. Dans ce mode de réalisation, les quatre portions sont mobiles. Les portions de surface sont faites d'un matériau adapté pour réfléchir les rayons émis par les sources, tels que des matériaux utilités pour fabriquer un miroir.

Dans un mode de réalisation, chacune des portions de surface est configurée pour générer un faisceau spécifique par réflexion, par exemple :
- les portions 1A et 1B peuvent être configurée pour générer un faisceau primaire plat par réflexion ;
- la portion 2B peut être configurée pour générer un faisceau primaire de portée par réflexion. Pour ce faire, la portion 2B peut comprendre une forme et/ou un revêtement 4 spécifiquement adapté pour générer un faisceau concentré comprenant une coupure horizontale ;
- la portion 2A peut être configurée pour générer un faisceau primaire à coupure oblique par réflexion. Pour ce faire, la portion 2A comprend une partie supérieure 3A et une partie inférieure 3B. Ces parties, prises seules ou en combinaison, comprennent une forme et/ou un revêtement spécifiquement adapté pour générer un faisceau concentré comprenant une coupure horizontale.

Dans un mode de réalisation, au moins une portion de surface est une surface de type complexe. La surface de type complexe comporte une section présentant une première partie inférieure présentant un premier foyer agencé de sorte à ce que des rayons lumineux émis à partir de ce premier foyer soient renvoyés au-dessous d'une ligne prédéterminée. La surface complexe comporte en outre une deuxième partie supérieure présentant un deuxième foyer, distinct du premier foyer, agencé de sorte à ce que des rayons lumineux émis à partir de ce deuxième foyer soient renvoyés au-dessous de ladite ligne prédéterminée.

En particulier, la source lumineuse associée à la portion de surface de type complexe peut être disposée au barycentre desdits premier et deuxième foyers, le barycentre constituant le foyer de la portion de surface.

Au moins une portion de surface peut également présenter une section de profil parabolique.

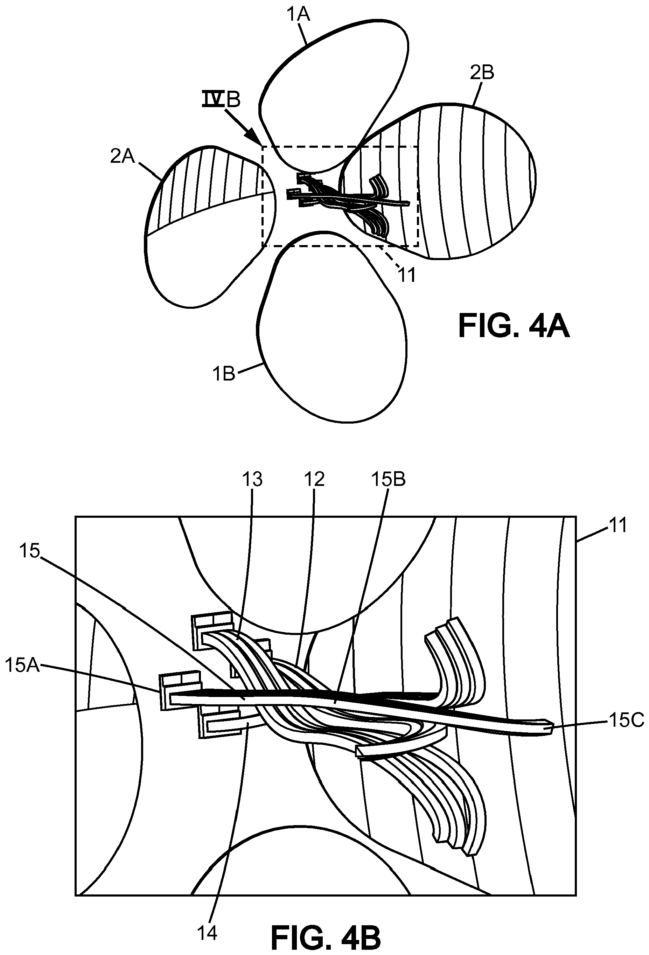

Le module comporte en outre quatre sources lumineuses 21A, 21B, 22A et 22B, chaque source lumineuse étant respectivement associée aux portions de surfaces 1A, 1B, 2A et 2B pour générer un faisceau lumineux primaire par réflexion de la lumière issue de cette source. Les sources lumineuses sont décrites en détail ci-après en référence aux figures 4A et 4B.

Dans la première position, les portions de surfaces sont dans une première configuration par rapport aux sources, dans laquelle les faisceaux lumineux primaires sont réfléchis pour se superposer en un premier faisceau global présentant une intensité maximale supérieure à une première valeur seuil donnée.

Ainsi, par exemple, la source 21A émet des rayons lumineux sur la portion de surface 1A. Ces rayons sont réfléchis par la portion de surface de manière à ce que les rayons réfléchis résultants se superposent. Comme expliqué ci-avant, des portions de surfaces de type complexe ou parabolique présentant un indice de réflexion suffisant sont aptes à générer une telle superposition. L'indice de réflexion peut être variable.

La figure 1B illustre un mouvement des portions de surface mobiles, dans un mode de réalisation. Les mouvements, de la première position vers une deuxième position, des portions de surfaces 1A, 1B, 2A et 2B sont respectivement représentés par les flèches 5A, 5B, 6A et 6B.

La figure 1B illustre un mouvement des quatre portions de surface. Toutefois, il est également possible que seule une portion de surface soit mobile. Dans cette situation, notamment, le module lumineux peut comporter un dispositif de contrôle de l'alimentation électrique des sources lumineuses agencé pour diminuer la puissance électrique fournies à au moins une source lumineuse lorsque la portion mobile est déplacée de la première position vers la deuxième position.

Toutes autres combinaisons (mouvement de portions 1A et 1B ou de 2A et 2B ou de1A, 2A et 2B, etc.) de mouvement de portions de surface sont également possibles.

Dans la deuxième position, les portions de surfaces prennent une deuxième configuration dans laquelle les faisceaux lumineux primaires sont réfléchis pour se superposer en un deuxième faisceau global présentant une intensité maximale inférieure à une deuxième valeur seuil donnée.

On entend par « les portions de surfaces prennent une deuxième configuration » qu'au moins une portion de surface a effectué un mouvement qui a pour conséquence que les faisceaux lumineux primaires sont réfléchis pour se superposer en le deuxième faisceau global. Ceci n'implique pas nécessairement que chaque portion de surface doit effectuer un mouvement. En effet, il est possible de faire effectuer un mouvement à une seule portion de surface pour modifier les effets optiques de superposition (typiquement en défocalisant la source de la portion de surface amovible) et ainsi changer la valeur de l'intensité maximale. Comme expliqué ci-avant, il est également possible de faire varier la puissance électrique fournies d'au moins une source lumineuse.

La première valeur seuil donnée est au moins 10 fois supérieure à la deuxième valeur seuil donnée. Par exemple, la première valeur est 30 fois supérieure à la deuxième valeur.

Le mouvement de ladite au moins une portion mobile de la première position vers la deuxième position est agencé pour décaler le faisceau primaire réalisé par cette portion mobile par rapport au faisceau primaire réalisé par une autre portion du réflecteur. En particulier, ce mouvement est configuré pour que le recouvrement de ces faisceaux primaires et l'intensité maximale du faisceau global réalisé par la superposition de ces faisceaux primaires soient réduits.

Plus précisément, le mouvement de la portion mobile de la première position vers la deuxième position est agencé pour écarter un foyer de ladite portion mobile de la position de la source lumineuse associée à la portion mobile. Typiquement, la première position de la portion mobile est une position dans laquelle la source lumineuse associée à la portion mobile est disposée sensiblement au foyer de la portion mobile et la deuxième position de la portion mobile est une position dans laquelle la source lumineuse associée à la portion mobile est disposée sensiblement en dehors du foyer de la portion mobile.

Cette défocalisation de la source par rapport à une portion de surface réfléchissante comprend un décalage de la source par rapport au foyer de la portion de surface. En effet, lorsque la source est écartée du foyer, les rayons lumineux réfléchis ne convergent plus. L'effet de superposition des rayons est donc fortement réduit et l'intensité maximale varie en conséquence.

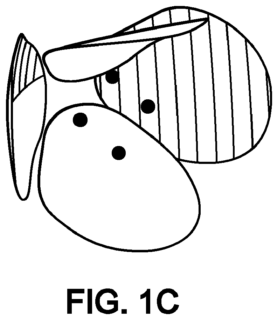

La **figure 1C** illustre le module lumineux dans la deuxième position, selon un mode de réalisation. Dans ce mode de réalisation, toutes les portions ont effectué un mouvement.

La forme générale du module lumineux peut être assimilée à la forme d'une fleur comportant quatre pétales. Le mouvement peut alors être assimilé à la fermeture (ou repliement) des pétales de la fleur.

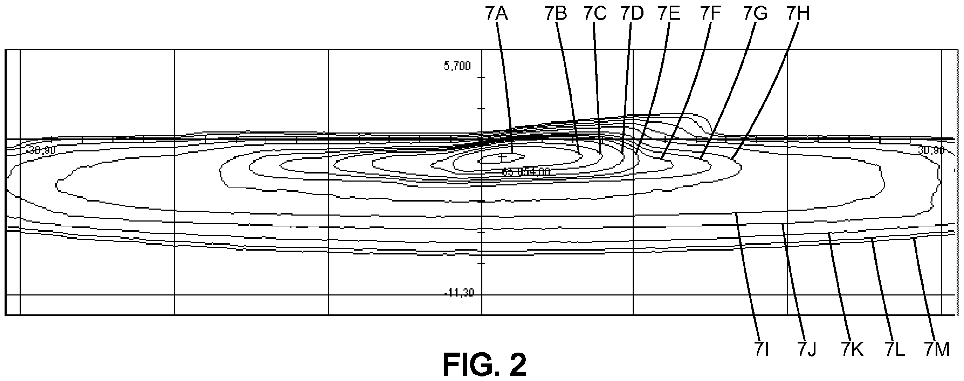

La **figure 2** est un diagramme d'éclairement du module lumineux selon un mode de réalisation de l'invention, dans la première position. Les courbes 7A à 7M indiquent les variations dans l'espace de l'intensité du faisceau global généré. Ce diagramme peut être vu comme un écran sur lequel le faisceau serait projeté.

Dans la première position, le faisceau global est concentré autour d'un point central situé au centre de l'ellipsoïde formée par la courbe 7A, qui correspond à la plus forte intensité. Le faisceau est bien localisé sous une ligne horizontale, comme requis par les réglementations en vigueur. Par ailleurs, un léger décalage oblique, ou « kink » en anglais, est présent dans la partie supérieure de la ligne horizontale, comme également requis par les réglementations en vigueur. Ce kink est typiquement généré par la portion 2A qui peut être configurée pour générer un faisceau primaire à coupure oblique par réflexion.

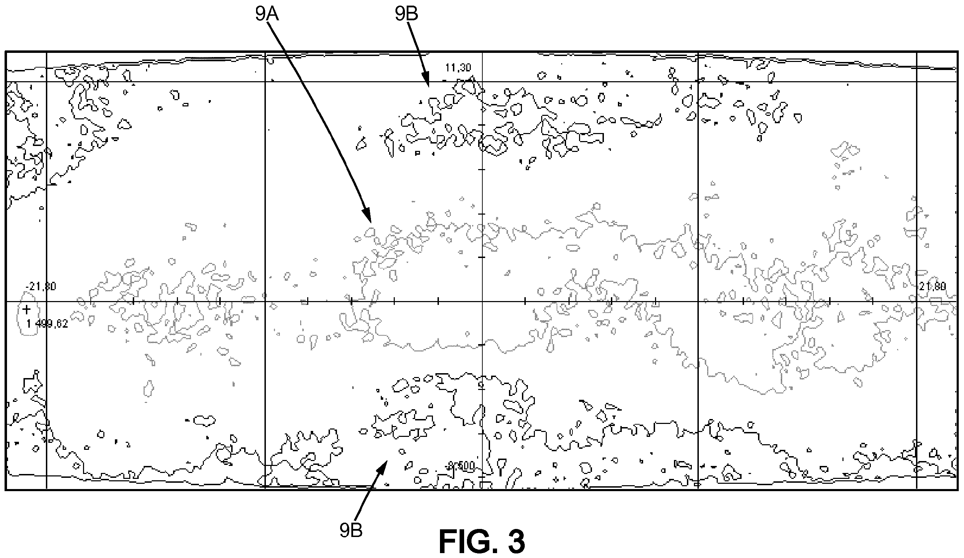

La **figure 3** représente le diagramme d'éclairement du module lumineux selon un mode de réalisation de l'invention, dans la deuxième position. Les courbes 9A et 9B indiquent les variations dans l'espace de l'intensité du faisceau global généré. Ce diagramme également peut être vu comme un écran sur lequel le faisceau serait projeté.

La courbe 9A (courbe gris clair) représente la plus forte intensité et la courbe 9B (courbe noire) représente une intensité moindre. Toutefois, les intensités varient très peu entre les deux courbes.

En effet, dans la deuxième position, le faisceau global est bien plus diffus que dans la première position. Comme mentionné ci-avant, cet effet diffus du faisceau global est typiquement obtenu par une défocalisation des sources par rapport aux foyers respectifs des portions de surface.

Ainsi, le diagramme représenté à la figure 3 illustre le faisceau global diffus généré dans la deuxième position.

Les **figures 4A** et **4B** illustrent un mode de réalisation possible pour les sources de lumière. Dans ce mode de réalisation, les sources lumineuses sont formées par des extrémités de guides de lumière 12, 13, 14 et 15, d'autres extrémités respectives des guides étant reliés aux puces émettrices.

Les guides de lumières peuvent comporter tout type de matière apte à guider la lumière. Par exemple, les guides peuvent comprendre tout type de matériau comportant du silicium, tel qu'un siloxane ou un polysiloxane. Le guide peut être rigide ou flexible.

La figure 4B est un zoom de la partie 11 de la figure 4A. On détaille maintenant le guide de lumière 15 en référence à la figure 4B.

Le guide de lumière comprend une extrémité 15C configurée comme sortie de la lumière guidée dans le corps 15B du guide 15. Le guide présente une forme linéique, planaire, tubulaire ou encore rectangulaire. L'autre extrémité 15A du guide est typiquement reliée à une puce émettrices de lumière à semi-conducteur. Ces puces comprennent par exemple des diodes électroluminescentes, LED pour « Light-Emitting Diode » en anglais.

La lumière générée à partir de l'extrémité 15A est donc guidée à travers le corps 15B pour sortir au niveau de l'extrémité 15C. Comme expliqué ci-avant, dans la première position, l'extrémité 15C peut être placée au niveau du foyer de la portion de surface correspondante, portion 2B dans le cas du guide 15.

Dans un mode de réalisation préférentiel, les sources sont fixes par rapport au module lumineux. En variante, les sources présentent également un mouvement, par exemple pendant le passage de la première position à la deuxième position de ladite au moins une portion de surface.

Les sources de lumières peuvent également être des sources simples, sans guide de lumière. Par exemple, les sources de lumière peuvent simplement être les puces émettrices de lumière.

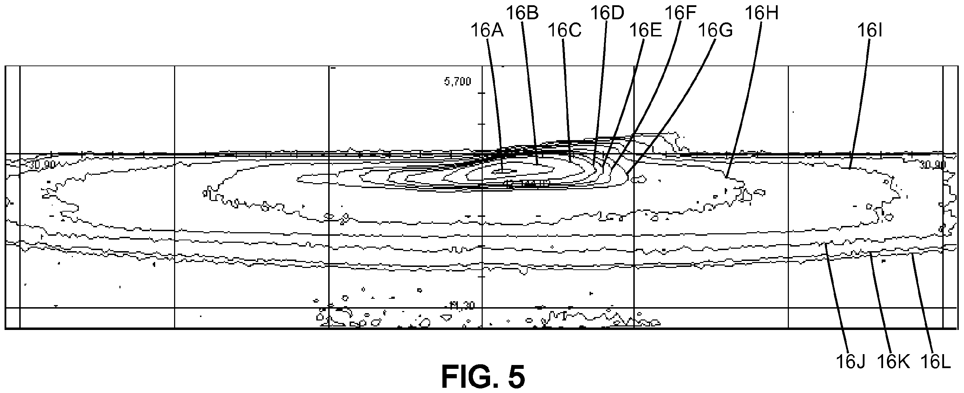

La **figure 5** représente le diagramme d'éclairement du module lumineux selon un mode de réalisation de l'invention, dans la première position et avec les guides de lumières. Il est précisé que les diagrammes représentés aux figures 2 et 3 correspondent aux situations où les sources de lumière sont des sources simples, telles que des puces émettrices. Les courbes 16A à 16L indiquent les variations dans l'espace de l'intensité du faisceau global généré. Ce diagramme peut être vu comme un écran sur lequel le faisceau serait projeté.

Dans la première position, le faisceau global est concentré autour d'un point central situé au centre de l'ellipsoïde formée par la courbe 16A, qui correspond à la plus forte intensité. Par rapport à la figure 2, les courbes d'intensité présentent des frontières plus diffuses, notamment dans les zones plus éloignées de la tache centrale délimité par la courbe 16A d'intensité maximale. Ainsi, les courbes 16H à 16L présentent des frontières plus diffuses.

La présente invention ne se limite pas aux formes de réalisation décrites ci-avant à titre d'exemples ; elle s'étend à d'autres variantes.

Ainsi, on a décrit ci-avant un mode de réalisation dans lequel le module d'émission lumineuse présentait sensiblement une forme de fleur. Toutefois, tous les types de formes dans toutes les directions sont couverts par la présente invention. Par exemple, deux portions de surface de forme rectangulaire ou encore huit portions de surface de forme triangulaire sont également couvertes.

En outre, un nombre spécifique de sources lumineuses et de portion de surface a été décrit ci-avant. Bien sûr, le nombre de sources/portions n'est pas limité à ces exemples, et l'invention couvre toutes les combinaisons possibles de source et de portions.

## Revendications

1. Module lumineux pour véhicule automobile, comportant un réflecteur présentant au moins deux portions de surfaces (1A, 1B, 2A, 2B), au moins l'une des portion de surfaces étant mobile, et au moins deux source lumineuses (21A, 21B, 22A, 22B), chaque source lumineuse étant associée à l'une des portions de surfaces pour générer un faisceau lumineux primaire par réflexion de la lumière issue de ladite source ;
**caractérisé en ce que** ladite au moins une portion de surface mobile est apte être déplacée :
- selon une première position de sorte à ce que les portions de surfaces prennent une première configuration dans laquelle les faisceaux lumineux primaires sont réfléchis pour se superposer en un premier faisceau global présentant une intensité maximale supérieure à une première valeur seuil donnée ;
- selon une deuxième position de sorte à ce que les portions de surfaces prennent une deuxième configuration dans laquelle les faisceaux lumineux primaires sont réfléchis pour se superposer en un deuxième faisceau global présentant une intensité maximale inférieure à une deuxième valeur seuil donnée ;
la première valeur seuil donnée étant 10 fois supérieure à la deuxième valeur seuil donnée.

2. Module lumineux selon la revendication 1 dans lequel le mouvement (5A, 5B, 6A, 6B) de la portion mobile de la première position vers la deuxième position est agencé pour décaler le faisceau primaire réalisé par la portion mobile par rapport au faisceau primaire réalisé par une autre portion du réflecteur, de sorte à diminuer le recouvrement des faisceaux primaires et l'intensité maximale du faisceau global réalisé par la superposition des faisceaux primaires.

3. Module lumineux selon l'une des revendications 1 ou 2, dans lequel le mouvement (5A, 5B, 6A, 6B) de la portion mobile de la première position vers la deuxième position est agencé pour écarter un foyer de ladite portion mobile de la position de la source lumineuse associée à la portion mobile.

4. Module lumineux selon l'une des revendications précédentes, dans lequel la première position de la portion mobile est une position dans laquelle la source lumineuse associée à la portion mobile est disposée sensiblement au foyer de la portion mobile.

5. Module lumineux selon l'une des revendications précédentes, dans lequel la deuxième position de la portion mobile est une position dans laquelle la source lumineuse associée à la portion mobile est disposée sensiblement en dehors du foyer de la portion mobile.

6. Module lumineux selon l'une des revendications précédentes, dans lequel le réflecteur comporte au moins trois portions de surfaces mobiles, notamment quatre, et
dans lequel chaque portion est mobile par rapport à la source lumineuse qui lui est associée.

7. Module lumineux selon l'une des revendications précédentes, dans lequel les sources lumineuses sont des puces émettrices de lumière à semi-conducteur.

8. Module lumineux selon la revendication 7, dans lequel les sources lumineuses sont formées par des extrémités (15C) de guides de lumière (12, 13, 14, 15), d'autres extrémités (15A) respectives des guides étant reliés aux puces émettrices.

9. Module lumineux selon l'une des revendications précédentes, comportant au moins trois portions de surface, dans lequel :
au moins une première portion (1A, 1B), notamment deux, est configurée pour générer un faisceau primaire plat par réflexion ;
au moins une deuxième portion (2A) est configurée pour générer un faisceau primaire de portée par réflexion ;
au moins une troisième portion (2B) est configurée pour générer un faisceau primaire à coupure oblique par réflexion.

10. Module lumineux selon la revendication 9, dans lequel les première, deuxième et troisième portions sont mobiles de sorte à être aptes à être déplacées de la première à la deuxième position, et
dans lequel un premier faisceau global réalisé par la superposition, lorsque les première, deuxième et troisième portions sont dans la première position, des faisceaux primaires plat, de portée et oblique est un faisceau de type croisement réglementaire.

11. Module lumineux selon l'une des revendications 9 ou 10, dans lequel les première, deuxième et troisième portions sont mobiles de sorte à être aptes à être déplacées de la première à la deuxième position, et
dans lequel un deuxième faisceau global réalisé par la superposition, lorsque les première, deuxième et troisième portions sont dans la deuxième position, des faisceaux primaires plat, de portée et oblique est un faisceau de type feu diurne réglementaire.

12. Module lumineux selon l'une des revendications précédentes, dans lequel au moins une portion de surface est une surface de type complexe,
ladite surface de type complexe comportant une section présentant une première partie inférieure présentant un premier foyer agencé de sorte à ce que des rayons lumineux émis à partir de ce premier foyer soient renvoyés au-dessous d'une ligne prédéterminée, et
comportant une deuxième partie supérieure présentant un deuxième foyer, distinct du premier foyer, agencé de sorte à ce que des rayons lumineux émis à partir de ce deuxième foyer soient renvoyés au-dessous de ladite ligne prédéterminée.

13. Module lumineux selon la revendication 12, dans lequel la source lumineuse associée à la portion de surface de type complexe est disposée au barycentre desdits premier et deuxième foyers, le barycentre constituant le foyer de la portion de surface.

14. Module lumineux selon l'une des revendications précédentes, dans lequel au moins une portion de surface présente une section de profil parabolique.

15. Module lumineux selon l'une des revendications précédentes, dans lequel le module lumineux comporte un dispositif de contrôle de l'alimentation électrique des sources lumineuses agencé pour diminuer la puissance électrique fournies à au moins une source lumineuse lorsque la portion mobile est déplacée de la première position vers la deuxième position.
